Europäisches Patentamt

European Patent Office

Office européen des brevets

(19)

(11) Veröffentlichungsnummer: **0 326 624 B1**

(12) **EUROPÄISCHE PATENTSCHRIFT**

(45) Veröffentlichungstag der Patentschrift: **22.04.92**

(21) Anmeldenummer: **88101365.0**

(22) Anmeldetag: **30.01.88**

(51) Int. Cl.⁵: **H01R 9/26**

(54) **Montagefuss für Reihenklemmen.**

(43) Veröffentlichungstag der Anmeldung:
**09.08.89 Patentblatt 89/32**

(45) Bekanntmachung des Hinweises auf die
Patenterteilung:
**22.04.92 Patentblatt 92/17**

(84) Benannte Vertragsstaaten:
**CH DE ES FR GB IT LI**

(56) Entgegenhaltungen:
**DE-B- 1 174 393**
**DE-U- 7 709 171**
**FR-A- 2 172 827**
**US-A- 4 018 413**

(73) Patentinhaber: **C.A. Weidmüller GmbH & Co.**
**Postfach 950 Paderborner Strasse 175**
**W-4930 Detmold 14(DE)**

(72) Erfinder: **Haller, Bernd**
**Schau ins Land 7**
**W-4930 Detmold(DE)**
Erfinder: **Herkner, Ernst**
**Wiembecker Strasse 21A**
**W-4920 Lemgo(DE)**
Erfinder: **Murray, Peter**
**Heinrich Röhr Strasse 21**
**W-4930 Detmold(DE)**

Erfinder: **Riesenberg, Volker**
**Mühlenstrasse 22 A**
**W-4930 Detmold(DE)**
Erfinder: **Schnatwinkel, Michael**
**Schmiedestrasse 39**
**W-4900 Herford(DE)**
Erfinder: **Schulze, Rainer**
**Schmaler Weg 7**
**W-4930 Detmold(DE)**
Erfinder: **Wagner, Georg**
**Im Elkenkamp**
**W-4811 Oerlinghausen(DE)**
Erfinder: **Wilmes, Manfred**
**Ellernbruchweg 19**
**W-4930 Detmold(DE)**

(74) Vertreter: **Loesenbeck, Karl-Otto, Dipl.-Ing. et al**
**Jöllenbecker Strasse 164**
**W-4800 Bielefeld 1(DE)**

EP 0 326 624 B1

## Beschreibung

Die Erfindung betrifft einen Montagefuß für Reihenklemmen mit den Merkmalen des Oberbegriffs von Anspruch 1. Ein solcher Montagefuß ist beispielsweise aus der US-A-4 018 413 bekannt.

Bei einem derartigen, in vielen Ausführungsformen bekannten Bauprinzip des Montagefußes ist üblicherweise der eine Rasthaken feststehend ausgebildet und bildet ein Festlager, so daß das Verrasten und Entrasten des Montagefußes auf der Tragschiene durch eine Verlagerung des beweglichen, elastisch abgefederten Rasthakens geschieht, und zwar durch eine Verschwenkbewegung mit dem Festlager als Drehpunkt. Bei diesem Bauprinzip hat die elastisch abgefederte Rastverbindung zwischen Rasthaken und Tragschienenschenkel auch im wesentlichen all die Kräfte aufzufangen, die bei auf der Tragschiene montierter Reihenklemme auf diese beim Anschließen der Leiter an die Leiterklemme und insbesondere beim Richten der Leiter nach ihrem Anschluß an die Reihenklemme auf letzterer ausgeübt werden. Sind die Kräfte entsprechend groß, kommt es zu einem unzeitigen Abkippen der Reihenklemme von der Tragschiene. Die Gefahr ist besonders bei großen Reihenklemmen zum Anschließen von Leitern erheblicher Querschnitte, die ihrerseits dann entsprechend stabil sind, groß. Darüber hinaus bringt das Erfordernis der Kippbewegung bei der Montage und Demontage der Reihenklemme einen relativ großen Raumbedarf mit sich.

Der vorliegenden Erfindung liegt von daher die Aufgabe zugrunde, einen Montagefuß für Reihenklemmen zu schaffen, der ein verschwenkbewegungsfreies senkrechtes Aufsetzen und insbesondere Abnehmen der Reihenklemme von der Tragschiene ermöglicht und dabei zugleich auch gegenüber hohen Belastungskräften ein unbeabsichtigtes, unzeitiges Abrasten der Reihenklemme von der Tragschiene verhindert.

Die erfindungsgemäße Lösung ist durch die Merkmale des zweiten Teils von Anspruch 1 gekennzeichnet.

Hervorzuheben ist, daß es dank dieser Ausgestaltung ein Festlager im Montagefußbereich nicht mehr gibt. Beide Raststücke können durch entsprechendes Einwirken auf die elastisch abgefederten Schieberstücke in deren Öffnungsbewegungsrichtung außer Eingriff mit den Tragschienenschenkeln gebracht werden, so daß der Montagefuß senkrecht von oben von der Tragschiene dann abgehoben werden kann. Die Montage der Reihenklemme geschieht in denkbar einfacher Weise durch senkrechtes Aufsetzen auf die Tragschiene. Die üblicherweise unterseitig leicht geschrägten Rasthaken weichen gegen die Kraft ihrer Abfederung aus und übergreifen dann schnappend die Enden der Tragschienenschenkel. Hervorzuheben ist, daß trotz der beidseitigen elastischen Halterung die Gefahr eines unzeitigen Abrastens bei äußeren Belastungen selbst bei hohen Kräften dank der besonders ausgestalteten Blockiereinrichtung auszuschließen ist. Jedes unzeitige Abrasten der Reihenklemme ist ja, sei es durch eine senkrechte Bewegung, sei es durch eine Kippbewegung, mit einer Anhebebewegung des Klemmengehäuses relativ zur Tragschiene verbunden. Durch eine solche Bewegung aber geraten die vorgesehenen Blockierkanten sofort in Kollisionslage. Die Schieberstücke sind damit in Richtung ihrer Öffnungsbewegung blockiert, so daß die ungewollte Abrastung unmöglich ist. Bei einer Betätigung der Schieberstücke dagegen im Sinne ihrer Öffnungsrichtung können die Blockierkanten dank des Freispieles in der Lagerung der Schieberstücke aneinander vorbeigleiten. Hervorzuheben ist in diesem Zusammenhang auch, daß durch die Blockiereinrichtung die an der Verrastung der Klemme beteiligten Elemente im Montagefuß, die häufig in Form von Kunststofffedern ausgebildet sind, vor jedweder äußerer Belastung geschützt sind. Diese Federn haben ausschließlich für das Anrücken der Rasthaken an die Schenkel der Tragschiene im Sinne ihrer Übergreifung zu sorgen.

Durch die mehr oder weniger starke Ausprägung in der Gestaltung der Blockiedrkanten kann man die gewünschte Abrastkraft, die in jedem Fall noch sicher aufgenommen werden soll, zugrundelegen.

Die nunmehr ermöglichte Entnahme der Reihenklemme senkrecht von der Tragschiene fort ohne dabei durchzuführende Schwenkbewegung ist nicht nur bezüglich des Raumbedarfes im Schaltschrank vordteilhaft. Sie ermöglicht darüber hinaus erstmalig den Einsatz relativ langer Fußbereiche auch in Verbindung mit besonders niedrig bauenden Tragschienentypen, also eine Zusammenstellung, die bislang daran gescheitert ist, daß man die erforderliche Schwenk- oder Kippbewegung zum Aufsetzen oder Entnehmen der Reihenklemmen praktisch nicht mehr durchführen konnte.

Eine weitere für die praktische Handhabung sehr wesentliche Ausgestaltung der Erfindung besteht darin, daß die beiden Schieberstücke gegenläufig bewegungsgekoppelt sind. Auf diese Weise ist erreicht, daß man durch Betätigung auf nur einer Seite der Reihenklemme beide Schieberstücke in die Freigabestellung bewegen kann, also noch problemlos eine Hand für die senkrechte Entnahme der Reihenklemme frei hat.

Weitere bevorzugte Ausgestaltungen, die insbesondere auch eine baulich einfache und funktionssichere Konstruktion verschiedener Ausführungsbeispiele des Erfindungsgegenstandes bewirken, sind in Unteransprüchen gekennzeichnet.

Zwei Ausführungsbeispiele eines Montagefußes gemäß der Eerfindung werden nachstehend unter Bezugnahme auf die Zeichnung näher beschrieben.

Es zeigen

Figur 1    eine Schieberausgestaltung eines Montagefußes gemäß der Erfindung in perspektivischer Darstellung mit teilweiser Illustration zusammenwirkender Elemente des umgebenden, der Klemme zugeordneten Gehäuses,

Figur 2    eine Seitenansicht einer mit einem Montagefuß gemäß der Erfindung ausgerüsteten zweischaligen Reihenklemme mit Fortlassung der einen Gehäusehälfte und Teilbrechung der Schieberausgestaltung zur Illustration damit zusammenwirkender Gehäuseteile,

Figur 3    eine Teilschnittdarstellung durch eine weitere Ausführungsform eines Montagefußes gemäß der Erfindung,

Figur 4    eine Draufsicht auf die Schieberanordnung des Montagefußes gemäß Figur 3.

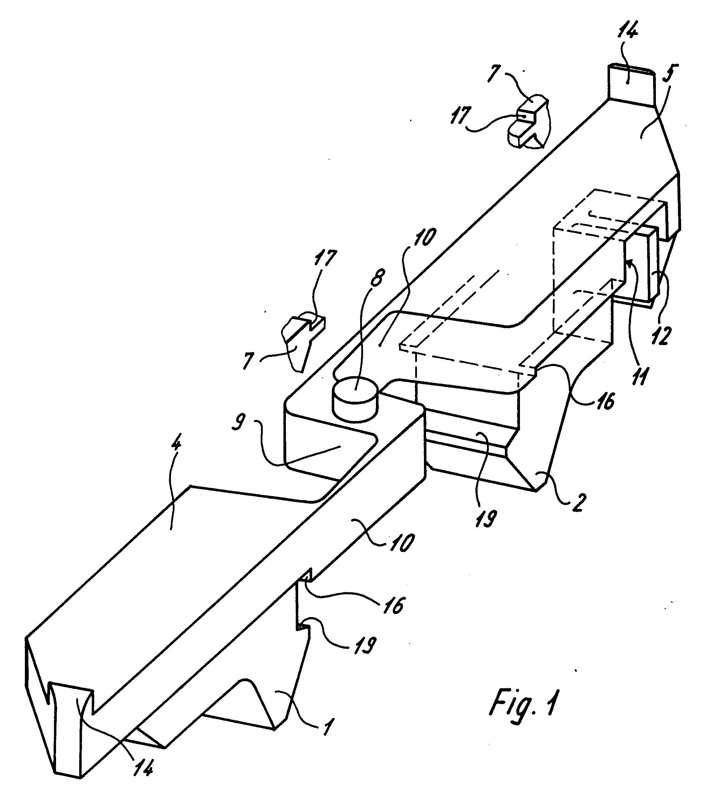

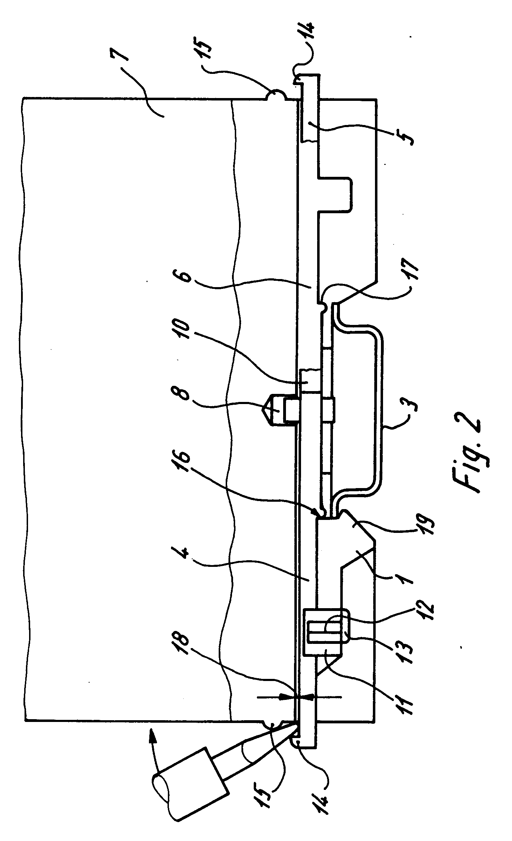

Bei dem in den Figuren 1 und 2 dargestellten Ausführungsbeispiel eines Montagefußes für eine Reihenklemme sind die beiden Rasthaken 1 und 2 des Montagefußes, die in der Rast-oder Montagestellung die freien Enden der Schenkel einer in Figur 2 illustrierten Tragschiene 3 übergreifen, in bezogen auf deren Längsseiten abgesetzter Form auf der Unterseite von Schieberstücken 4 und 5 vorgesehen, die ihrerseits in Richtung auf die Eingriffsstellung der Rasthaken 1, 2 mit den Schenkeln der Tragschiene 3 zu und von dieser Eingriffsstellung fort verschieblich in Führungen 6 eines umgebenden Gehäuses 7 geführt sind, wobei in den dargestellten Ausführungsbeispielen dieses Gehäuse 7 das Gehäuse der Reihenklemmen selbst ist. Es könnte sich bei dem Gehäuse 7 jedoch auch ohne weiteres um ein Gehäuseelement handeln, das einem Montagefuß als solchem zugeordnet ist, der dann gehäusemäßig mit dem Gehäuse der Reihenklemme durch eine Steckrast- oder Schraubverbindung verbunden wird.

Die beiden Schieberstücke 4 und 5 sind in Richtung auf ihre die Tragschienenschenkel übergreifende Verrastungsstellung zu abgefedert und darüber hinaus sind sie zweckmäßig gegenläufig bewegungsgekoppelt, so daß bei Betätigung des einen Schieberstückes das andere Schieberstück gleichzeitig die gewünschte gegenläufige Bewegung vollführen kann. Im Ausführungsbeispiel nach den Figuren 1 und 2 ist hierzu in baulich konstruktiv einfacher Weise ein elastisch wirkendes Drehgelenk vorgesehen, das die gewünschte synchronisierte gegenläufige Bewegungskopplung bewirkt. Das Drehgelenk beinhaltet obere und untere Lagerzapfen 8, die sich etwa in der Mitte eines Drehbügels 9 befinden, dessen beide freien Enden jeweils über elastisch verformbare Materialzonen 10 mit den beiden Schieberstücken 4 und 5 verbunden sind. Mindestens aus einer Seite, zweckmäßig auf beiden Seiten der Schieberausgestaltung sind dem bzw. beiden Schieberstücken 4, 5 Federn zugeordnet die die Schieberstücke 4 und 5 in Richtung auf die Eingriffslage mit den Tragschienenschenkeln mit Federkraft beaufschlagen. Im dargestellten Ausführungspbeispiel sind in den unteren, äußeren Bereichen der Schieberstücke 4 und 5, auch noch durch die Endzonen der Rasthaken 1 und 2 gehend, Kammern 11 gebildet, an deren Grund sich dann ein angespritzter Federssteg 12 zur Seite hin erstreckt, und zwar bezüglich der seitlichen Begrenzung der Rasthaken 1, 2 über deren seitliche Begrenzung hinaus. In der in diesem Bereich angrenzenden Wand des Gehäuses 7 sind, wie in Figur 2 auf der rechten Seite (Fortlassung des dortigen Schieberstückes) illustriert, Aussparungen 13 vorgesehen, in die das Ende des Federsteges 12 vorsteht und deren äußere Kante dann das Widerlager für die elastische Verbiegung des Federsteges 12 bildet, wenn sich das entsprechende Schieberstück 4, 5 nach außen bewegt.

Die vorstehend geschilderte Schieberausgestaltung einschließlich angespritzten Federsteges besteht vorzugsweise einstückig aus Kunststoff. An die beiden Schieberstücke 4 und 5 sind außen oben noch Betätigungsstege 14 angeformt, während am Gehäuse 7 außen schmalseitig in der Nähe dieser aus dem Gehäuse 7 vorstehenden Enden der Schieberstücke 4 und 5 ein kleines gerundetes Gegenlager 15 für ein Betätigungswerkzeug, beispielsweise einen in Figur 2 illustrierten Schraubendreher, vorgesehen ist.

Dank der vorstehend beschriebenen Ausgestaltung des Montagefußes kann in denkbar vorteilhafter Weise die entsprechend bestückte Reihenklemme in einer senkrechten Bewegung ohne Schwenkbewegung auf der Tragschiene 3 verrastet werden. Die Rasthaken 1, 2 haben in der üblichen Weise unten innen entsprechende Anlaufschrägen. Gelangen diese auf die Enden der Schenkel der Tragschiene 3, verlagern sich bei entsprechendem Druck auf die Reihenklemme die Rasthaken 1, 2 samt Schieberstücken 4 und 5 unter Verformung der dann an der Außenkante der Aussparungen 13 anliegenden Federstege 12 nach außen, bis die Rasthaken 1, 2 die Enden der Schenkel der Tragschiene 3 elastisch schnappend übergreifen. Dank des geschilderten elastischen Drehgelenkes bewegen sich dabei die Schieberstücke 4 und 5 synchron gegenläufig.

Zum gewollten Entrasten genügt es, auf einer der beiden Seiten der Klemme entweder das Schieberstück 4 oder das Schieberstück 5 gegen die Kraft der Federstege 12 in Öffnungsrichtung weiter nach außen zu drücken, was beispielsweise mit Hilfe des illustrierten Schraubendrehers geschehen kann. Mann läßt ihn hinter den Betätigungssteg 14 fassen und vollführt eine Verschwenkbewegung um das gerundete Gegenlager 15 in Richtung auf den Klemmenkörper zu. Wieder kommt es dank des geschilderten elastischen Drehgelenkes zu einer synchronen in bezogen aufeinander gegenläufigen Öffnungsbewegung der Schieberstücke 4 und 5, so daß man, wenn die Rasthaken 1 und 2 freigekommen sind, die Klemme senkrecht nach oben, ohne jedwede Schwenkbewegung, von der Tragschiene 3 abnehmen kann.

Da bei der geschilderten Ausgestaltung die Verrastung beider Rasthaken 1 und 2 auf den Enden der Tragschienenschenkel eine elastisch abgefederte ist, muß im besonderen Maße dafür Sorge getragen werden, daß nicht etwa äußere Belastungskräfte, die an der aufgerasteten Reihenklemme wirken können, zu einer unzeitigen unbeabsichtigten Abrastung der Reihenklemme von der Tragschiene 3 führen können. Derartige Belastungskräfte auch in beträchtlicher Höhe können beispielsweise dann auftreten, wenn bei Reihenklemmen zum Anschließen von Leitern großer Querschnitte nach dem Anschließen der Leiter an die Anschlüsse innerhalb der Reihenklemme noch Leiterausrichtungen durch Zurechtbiegen und Ziehen an den Leitern erfolgen. Hierzu weist erfindungsgemäß der Montagefuß eine Blockiereinrichtung auf, die für das Ausführungsbeispiel nach den Figuren 1 und 2 die nachstehend im einzelnen angegebene bauliche Ausgestaltung hat.

Hierzu sind zunächst auf der Unterseite der Schieberstücke 4 und 5 Blockierkanten 16 gebildet, und zwar dadurch, daß im Material der Schieberstücke 4, 5 im Bereich der nach innen weisenden Begrenzungsflächen der Rasthaken 1 und 2, und zwar im Material der Schieberstücke dort, wo diese Schieberstücke 4, 5 seitlich über die Rasthaken 1 und 2 vorstehen, Materialschultern gebildet sind. Ferner sind im angrenzenden, funktionsmäßig entsprechenden Bereich des Gehäuses 7 Blockierkanten 17 ausgebildet, die unter zu schildernden Umständen mit den Blockierkanten 16 an den Schieberstücken 4 und 5 kollidierend im Sinne einer Blokkierung zusammenwirken können, wenn sich die Schieberstücke 4, 5 in einer Anfangsphase ihrer nach außen gerichteten Öffnungsbewegung befinden. Wesentlich ist in diesem Zusammenhang noch, daß die Schieberstücke 4, 5 mit allen zugehörigen und anhängenden Teilen mit einem Freispiel 18 senkrecht zur Schieberbewegungsrichtung in dem Gehäuse 7 gelagert sind. Um bezüglich des Punktes der tatsächlichen Blockierung der Bewegung der Schieberstücke 4, 5 toleranzmäßig ein wenig flexibel zu sein, sind ferner zweckmäßigerweise die unteren, an der Verrastung auf den Tragschienenschenkeln mitwirkenden Innenflächen 19 der Rasthaken 1, 2 als Schrägen ausgebildet. Wirkt bei der geschilderten Ausgestaltung nun eine äußere Kraft auf die Reihenklemme mit der Tendenz, das Gehäuse 7 von der Tragschiene 3 abzuheben, führt die entsprechende Abhebekraft umgehend dazu, daß unter Überwindung des Freispieles 18 das Gehäuse 7 sich bezüglich der Rasthaken 1, 2 und damit der Schiebestücke 4, 5 anhebt, da die Rasthaken 1, 2 von den Enden der Schenkel der Tragschiene 3 demgegenüber im wesentlichen unten gehalten werden, wobei es über die schrägen Innenflächen 19 der Rasthaken 1 und 2 auch noch zu einer sehr kleinen Auseinanderfahrbewegung der Schieberstücke 4, 5 kommt, die aber sofort gestoppt wird, weil dank der Überwindung des Freispieles 18 jetzt die Blockierkanten 16 und 17 kollidierend voreinanderstoßen. Da dies auf beiden Seiten geschieht, ist die Reihenklemme gegen ein unzeitiges Abrasten selbst durch hohe äußere Belastungskräfte abgesichert.

Wird dagegen in der eingangs geschilderten Weise mittels eines Hilfswerkzeuges auf die Schieberstücke 4 oder 5 im Sinne ihrer gewollten Öffnungsbewegung eingewirkt, bewirkt dies keinerlei Bewegungskomponente in Richtung der Überwindung des Freispieles 18, so daß bei dieser gewollten Betätigung des einen oder anderen Schieberstückes im Sinne der Öffnung die Blockierkanten 16 und 17 problemlos übereinander hinweggleiten und die Öffnungsbewegung vollführt werden kann.

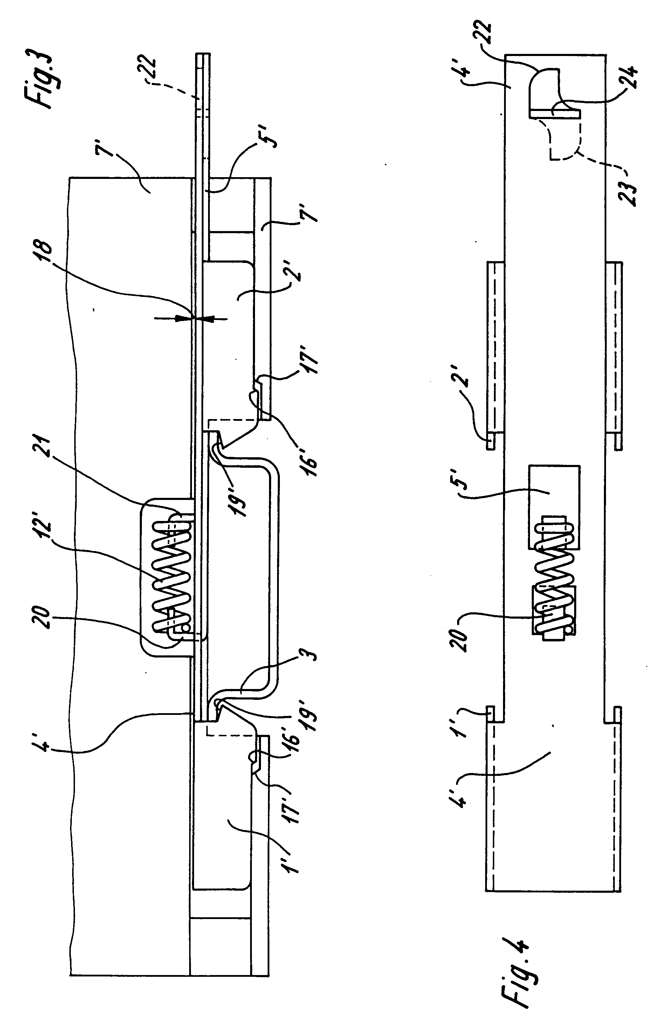

Das in den Figuren 3 und 4 dargestellte Ausführungsbeispiel eines erfindungsgemäßen Montagefußes weist das gleiche grundsätzliche Bau- und Funktionsprinzip auf. Die Rasthaken 1' und 2' befinden sich hier in Form metallischer Laschen an Schiebestücken 4', 5' in Form metallischer Leisten, die relativ zueinander verschieblich aneinanderliegen und im dargestellten Ausführungsbeispiel nur an einer Seite gesehen auf Figur 3 an der rechten Seite, aus dem Gehäuse 7' herausgeführt sind. Am inneren Ende des Schiebestückes 5' befindet sich eine hakenförmige Abwinkelung 20, die durch eine Durchtrittsöffnung auf die Oberseite des Schieberstückes 4' geführt ist. Auf dieser Oberseite befindet sich, der hakenförmigen Abwinkelung 20 gegenüberliegend, eine weitere hakenförmige Abwinkelung 21, die an dem Schieberstück 4' befestigt ist. Zwischen den beiden Abwinkelungen 20, 21 stützt sich eine Feder 12' ab, deren Federkraft darauf ausgelegt ist, eine elastische, schnappende übergreifende Verrastung der Rasthaken 1', 2' auf den Schenkeln der Tragschiene 3 zu bewirken.

Es ist auch wieder eine Blockiereinrichtung vorgesehen, wozu im Ausführungsbeispiel nach den Figuren 3 und 4 an den schmalen Unterseiten der laschenförmigen Rasthaken 1′, 2′ Blockierkanten 16′ ausgebildet sind, für die in entsprechend geringem Abstand im angrenzenden Berich des Gehäuses 7′ Blockierkanten 17′ durch entsprechende Materialschultern gebildet sind. Auch die Innenflächen 19′ der Rasthaken 1′, 2′ sind wieder als Schräge ausgebildet. Inspesondere ist ferner die Schieberanordnung bestehend aus den Schieberstücken 4′, 5′ wieder in einer Richtung senkrecht zur Bewegungsrichtung der Schieberstücke 4′, 5′ mit einem Freispiel 18 dem Gehäuse 7′ gelagert. Im dargestellten Ausführungsbeispiel befinden sich in den aus dem Klemmengehäuse 7′ herausgeführten Enden der leistenförmigen Schieberstücke 4′, 5′ kurvenförmige Betätigungsöffnungen 22, 23, wobei die kurvenförmige Betätigungsöffnung 22 in dem Schieberstück 4′ spiegelbildlich entgegengesetzt zu der entsprechenden Betätigungsöffnung 23 im Schieberstück 5′ liegt und sich in der Raststellung die kurvenförmigen Betätigungsöffnungen 22 und 23 so weit überdecken, daß sie in ihrem Überdeckungsbereich einen durchgehenden Steckschlitz 24 für einen Schraubendreher bilden.

Das senkrechte Aufrasten der Klemme auf die Tragschiene geschieht wiederum dadurch, daß man ohne jedwede Kippbewegung die üblichen abgeschrägten nach innen weisenden Außenflächen der Rasthaken 1′, 2′ auf die Enden der Tragschienenschenkel aufsetzt und Druck ausübt, woraufhin sich die Schieberstücke 4′, 5′ mit den Rasthaken 1′, 2′ jeweils gegen die Kraft der Feder 12′ nach außen bewegen, bis es zum schnappenden Übergreifen der Tragschienenschenkel kommt. Zum gewollten Öffnen werden nach Einstecken eines Schraubendrehers in den Steckschlitz 24 und entsprechendem Verdrehen über die Betätigungskurven die Schieberstücke 4′, 5′ synchron gegenläufig gegen die Kraft der Feder 12′ in die Öffnungsstellung gebracht, in der man die Klemme senkrecht nach oben ohne jede Kippbewegung von der Tragschiene 3 abnehmen kann. Ein ungewolltes Abrasten der Klemme durch äußere Belastungskräfte kann nicht geschehen, da jedwede tendenzielle Anhebung des Klemmengehäuses 7′ gegenüber den durch die von den Tragschienenschenkeln im wesentlichen in einer unteren Lage gehaltenen Rasthaken 1′, 2′ samt den Schieberstücken 4′, 5′ unter sicherer Überwindung des Freispieles 18 die Blockierkanten 16′, 17′ in eine gegenseitige Kollisionslage bringt und eine Öffnungsbewegung dadurch schon in der Anfangsphase gestoppt wird. Bei der gewollten Betätigung der Schieberstücke 4′, 5′ fehlen dagegen die die Blockierungslage gewährleistenden Kraftkomponenten, so daß dann die Blockierkanten 16′, 17′ wieder übereinander hinweggleiten können.

**Patentansprüche**

1. Montagefuß für Reihenklemmen mit beide Schenkel einer Tragschiene übergreifenden Rasthaken (1, 1′; 2, 2′), von denen einer beweglich und elastisch abgefedert ist, die jeweils an gehäuseseitig geführten Schieberstücken (4, 4′; 5,5′) angeordnet sind, die in Richtung der Verrastung der Rasthaken (1, 1′; 2,2′) mit den Tragschienenschenkeln durch Federn (12, 12′) abgefedert sind, wobei an dem Schieberstücken (4, 4′; 5, 5′) und am umgebenden Gehäuse (7, 7') Blockierkanten (16, 17; 16', 17') vorgesehen sind, dadurch gekennzeichnet daß die Schieberstücke (4, 4'; 5,5') mit einem Freispiel (18) senkrecht zu ihrer Bewegungsrichtung im Gehäuse (7, 7') gelagert sind derart, daß ohne eine Anhebebewegung des Gehäuses (7, 7′) gegenüber den die Schenkel der Tragschiene (3) übergreifenden Rasthaken (1, 1′; 2, 2′) die Blockierkanten (16, 17; 16′, 17′) übereinander hinweggleitbar sind, sodaß die Schieberstückbewegung freigegeben ist, und bei Vorliegen einer entsprechenden Anhebebewegung die Blockierkanten (16, 17; 16', 17') in einer die in einer die Schieberstückbewegung blockierende Kollisionslage gebracht sind.

2. Montagefuß für Reihenklemmen nach Anspruch 1, dadurch gekennzeichnet, daß die Schieberstücke (4, 5; 4', 5') gegenläufig bewegungsgekoppelt sind.

3. Montagefuß für Reihenklemmen nach Anspruch 1, dadurch gekennzeichnet, daß die unteren Innenflächenbereiche der Rasthaken (1, 1′; 2, 2′) als nach außen abfallende Schrägen (19) ausgebildet sind.

4. Montagefuß für Reihenklemmen nach Anspruch 2, dadurch gekennzeichnet, daß die beiden Schieberstücke (4, 5) durch ein elastisches Drehgelenk miteinander verbunden sind, das einen mittig gelagerten Drehbügel (9) aufweist, dessen freie Enden über elastisch verformbare Materialabschnitte (10) mit den entsprechenden Enden der Schieberstücke (4, 5) verbunden sind.

5. Montagefuß für Reihenklemmen nach einem oder mehreren der vorhergehenden Ansprüche, dadurch gekennzeichnet, daß in den beiden Schieberstücken (4, 5) sowie den abgesetzt darunter angeordneten Rasthaken (1,2) seitlich Kammern (11) gebildet sind, von deren Grund seitlich angespritzte Federstege (12) vorstehen, wobei im entsprechenden Bereich des umgebenden Gehäuses (7) jeweils eine Aussparung (13) gebildet ist, deren nach außen weisende Begrenzungswand ein Gegenlager für die elastische Verformung des Federsteges (12) bildet.

6. Montagefuß für Reihenklemmen nach einem oder mehreren der vorhergehenden Ansprüche, dadurch gekennzeichnet, daß an die freien, aus dem Klemmengehäuse (7) vorstehenden Enden der Schieberstücke (4, 5) emporstehende Betätigungsstege (14) angeformt sind, in deren Nähe am Klemmengehäuse (7) gerundete Gegenlager (15) für ein Betätigungswerkzeug vorgesehen sind.

7. Montagefuß für Reihenklemmen nach Anspruch 1, dadurch gekennzeichnet, daß die Blockierkanten (16) an den Schieberstücken (4, 5) durch Schultern auf der Schieberstückunterseite angrenzend an den inneren Stirnflächen der Rasthaken (1, 2) gebildet sind.

8. Montagefuß für Reihenklemmen nach einem oder mehreren der vorhergehenden Ansprüche, dadurch gekennzeichnet, daß die Schieberstücke (4, 5) mit den Rasthaken (1, 2) sowie dem Drehbügel (9) und den elastisch verformbaren Materialabschnitten (10) und den Federstegen (12) einstückig aus Kunststoff hergestellt sind.

9. Montagefuß für Reihenklemmen nach einem der Ansprüche 1 bis 3, dadurch gekennzeichnet, daß die Schieberstücke ($4^{'}$, $5^{'}$) als übereinanderliegende Leisten ausgebildet sind, an denen nach unten abgewinkelte Laschen die Rasthaken ($1^{'}$, $2^{'}$) bilden, wobei die Schieberstücke ($4^{'}$, $5^{'}$) einander zugewandt liegende Haken (20, 21) aufweisen, von denen der Haken (20) des unteren Schieberstückes ($5^{'}$) das obere Schieberstück ($4^{'}$) durchtritt und wobei zwischen den Haken (20, 21) eine Feder ($12^{'}$) befestigt ist.

10. Montagefuß für Reihenklemmen nach Anspruch 9, dadurch gekennzeichnet, daß die Schieberstücke ($4^{'}$, $5^{'}$) mit den Rasthaken ($1^{'}$, $2^{'}$) und den Haken (20, 21) einstükkig aus Metall hergestellt sind.

11. Montagefuß für Reihenklemmen nach Anspruch 9, dadurch gekennzeichnet, daß die leistenförmigen Schieberstücke ($4^{'}$, $5^{'}$) an einem Ende seitlich aus dem Gehäuse ($7^{'}$) herausegeführt sind und sie hier jeweils mit kurvenförmigen Betätigungsöffnungen (22, 23) versehen sind, die von Schieberstück zu Schieberstück spiegelbildlich zueinander angeordnet sind, wobei sie sich in ihren angrenzenden Bereichen zur Bildung eines Steckschlitzes (24) für ein Betätigungswerkzeug überdekken, durch dessen Verdrehen nach Einsteckung die Schieberstücke ($4^{'}$, $5^{'}$) gegen die Kraft der Feder ($12^{'}$) gegenläufig zueinander auseinanderschiebbar sind.

12. Montagefuß für Reihenklemmen nach einem der Ansprüche 9 bis 11, dadurch gekennzeichnet, daß die Blockierkanten ($16^{'}$) durch Absetzungen auf den schmalen Unterkanten der laschenförmigen Rasthaken ($1^{'}$, $2^{'}$) gebildet sind.

## Claims

1. A mounting base for terminal blocks comprising retaining hooks (1, 1'; 2, 2') which engage over both limbs of a support rail and of which one is moveable and elastically sprung and which are each arranged on respective slider portions (4, 4'; 5, 5') which are guided at the housing side and which are sprung by springs (12, 12') in the direction of the latching engagement of the retaining hooks (1, 1'; 2, 2') with the limbs of the support rail, wherein blocking edges (16, 17; 16', 17') are provided on the slider portions (4, 4'; 5, 5') and on the surrounding housing (7, 7'), characterized in that the slider portions (4, 4'; 5, 5') are mounted with a free play (18) perpendicularly to their direction of movement in the housing (7, 7') in such a way that without a lifting movement of the housing (7, 7') relative to the retaining hooks (1, 1'; 2, 2') which engage over the limbs of the support rail (3) the blocking edges (16, 17; 16', 17') are slidable over each other so that the slider portion movement is permitted and when a corresponding lifting movement occurs the blocking edges (16, 17; 16', 17') are brought into a collision position of blocking the slider portion movement.

2. A mounting base for terminal blocks according to claim 1 characterised in that the slider portions (4, 5; 4', 5') are coupled for movement in opposite relationship.

3. A mounting base for terminal blocks according to claim 1 characterized in that the lower inside surface regions of the retaining hooks (1, 1'; 2, 2') are in the form of outwardly falling inclined surfaces (19).

4. A mounting base for terminal blocks according to claim 2 characterized in that the two slider portions (4, 5) are connected together by a resilient rotary pivot which has a centrally mounted rotary limb portion (9) whose free ends are connected by way of elastically deformable material portions (10) to the corresponding ends of the slider portions (4, 5).

5. A mounting base for terminal blocks according to one or more of the preceding claims characterized in that chambers (11) are laterally formed in the two slider portions (4, 5) and the retaining hooks (1, 2) which are arranged in displaced relationship therebeneath, spring legs (12) which are injection-moulded to the botttoms of the chambers projecting laterally therefrom, wherein formed in the corresponding region of the surrounding housing (7) is a respective recess (13) whose outwardly facing boundary wall forms a support means for elastic deformation of the spring leg (12).

6. A mounting base for terminal blocks according to one or more of the preceding claims characterized in that formed on the free ends of the slider portions (4, 5), which project out of the terminal housing (7), are upstanding actuating limbs (14), wherein provided in the vicinity of the actuating limbs on the terminal housing (7) are rounded supoprts (15) for an actuating tool.

7. A mounting base for terminal blocks according to claim 1 characterised in that the blocking edges (16) on the slider portions (4, 5) are formed by shoulders on the undersides of the slider portions adjoining the inward end faces of the retaining hooks (1, 2).

8. A mounting base for terminal blocks according to one or more of the preceding claims characterized in that the slider portions (4, 5) with the retaining hooks (1, 2) and the rotary limb portion (9) and the elastically deformable material portions (10) and the spring legs (12) are made in one piece from plastics material.

9. A mounting base for terminal blocks according to one of claims 1 to 3 characterised in that the slider portions (4', 5') are in the form of superposed bars on which downwardly angled plate portions form the retaining hooks (1', 2'), wherein the slider portions (4', 5') have hooks (20, 21 ) which are disposed facing towards each other and of which the hook (20) of the lower slider portion (5') passes through the upper slider portion (4'), and wherein a spring (12') is fixed between the hooks (20, 21).

10. A mounting base for terminal blocks according to claim 9 characterized in that the slider portions (4', 5') with the retaining hooks (1', 2') and the hooks (20, 21) are integrally made from metal.

11. A mounting base for terminal blocks according to claim 9 characterised in that the bar-shaped slider portions (4', 5') are extended at one end laterally out of the housing (7') and they are there each provided with respective curved actuating openings (22, 23) which are arranged in mirror image relationship with each other from one slider portion to the other, wherein they overlap in their adjoining regions to form an insertion slot (24) for an actuating tool, wherein after insertion of the tool, by rotation thereof, the slider portions (4', 5') can be pushed apart in opposite directions from each other against the force of the spring (12').

12. A mounting base for terminal blocks according to one of claims 9 to 11 characterised in that the blocking edges (16') are formed by steps on the narrow bottom edges of the plate-shaped retaining hooks (1', 2').

**Revendications**

1. Socle de montage pour plaques à bornes avec des crochets d'encliquetage (1, 1', 2, 2') passant sur les deux ailes d'un rail de support, dont un est mobile et suspendu élastiquement, ces deux crochets d'encliquetage étant disposés chacun sur des coulisseaux (4, 4', 5, 5') guidés côté boîtier et rendus élastiques par des ressorts (12, 12') dans la direction de l'encliquetage des crochets d'encliquetage (1, 1' ; 2, 2') avec les ailes du rail de support, des bords de blocage (16, 17 : 16', 17') étant prévus sur les coulisseaux (4, 4' : 5, 5') et sur le boîtier (7, 7') les entourant, caractérisé en ce que les coulisseaux (4, 4' : 5, 5') sont montés avec un jeu (18), perpendiculairement à leur direction de déplacement dans le boîtier (7, 7'), de manière que, sans relèvement du boîtier (7, 7') par rapport aux crochets d'encliquetage (1, 1' ; 2, 2') passant sur les ailes du rail de support (3), les arêtes de blocage (16, 17 : 16', 17') glissent l'une sur l'autre, ce qui fait que le déplacement des coulisseaux est libéré, et de manière qu'en présence d'un relèvement correspondant, les bords de blocage (16, 17 : 16', 17') sont amenés dans une position de collision bloquant le déplacement des coulisseaux.

2. Socle de montage pour plaques à bornes selon la revendication 1, caractérisé en ce que les coulisseaux (4, 5 : 4', 5') sont accouplés de manière à se déplacer en sens contraire.

3. Socle de montage pour plaques à bornes selon la revendication 1, caractérisé en ce que les zones inférieures des surfaces intérieures des crochets d'encliquetage (1, 1' ; 2, 2') sont des surfaces obliques (19) descendant vers le bas.

4. Socle de montage pour plaques à bornes selon la revendication 2, caractérisé en ce que les deux coulisseaux (4, 5) sont reliés entre eux par une articula-tion tournante élastique qui comporte un étrier tournant (9) monté au centre, dont les extrémités libres sont reliées, par des parties de matière (10) élastiquement déformables, avec les extrémités correspondantes des coulisseaux (4, 5).

5. Socle de montage pour plaques à bornes selon une ou plusieurs des revendications précédentes, caractérisé en ce que dans les deux coulisseaux (4, 5) ainsi que dans les crochets d'encliquetage (1, 2), situés au-dessous, en retrait, il est formé latéralement des chambres (11) du fond desquelles dépassent des cloisons formant ressort (12), venues de moulage par injection, sur le côté, dans la zone correspondante du boîtier (7) environnant étant formé chaque fois un évidement (13) dont la paroi de délimitation dirigée vers l'extérieur, constitue un contre-appui pour la déformation élastique de la cloison formant ressort (12).

6. Socle de montage pour plaques à bornes selon une ou plusieurs des revendications précédentes, caractérisé en ce que sur les extrémités libres, faisant saillie du boîtier de bornes (7), des coulisseaux (4, 5), sont formées des pattes d'actionnement (14) dressées vers le haut à proximité desquelles sont prévus, sur le boîtier de bornes (7), des contre-appuis (15) arrondis pour un outil d'actionnement.

7. Socle de montage pour plaques à bornes selon la revendication 1, caractérisé en ce que les bords de blocage (16) sont formés sur les coulisseaux (4, 5), par des épaulements sur la face inférieure des coulisseaux, à la limite des surfaces frontales intérieures des crochets d'encliquetage (1, 2).

8. Socle de montage pour plaques à bornes selon une ou plusieurs des revendications précédentes, caractérisé en ce que les coulisseaux (4, 5) avec les crochets d'encliquetage (1, 2) ainsi que l'étrier tournant (9) et les parties de matière (10) déformables élastiquement et les cloisons formant ressort (12), sont réalisés d'une seule pièce en matière plastique.

9. Socle de montage pour plaques à bornes selon l'une des revendications 1 à 3, caractérisé en ce que les coulisseaux (4', 5') sont conçus sous la forme de baguettes superposées sur lesquelles des pattes coudées vers le bas forment les crochets d'encliquetage (1', 2'), les coulisseaux (4', 5') présentant des crochets (20, 21) tournés l'un vers l'autre, dont le crochet (20) du coulisseau inférieur (5') traverse le coulisseau supérieur (4') et un ressort (12') étant fixé entre les crochets (20, 21).

10. Socle de montage pour plaques à bornes selon la revendication 9, caractérisé en ce que les coulisseaux (4', 5') sont réalisés d'une seule pièce en métal avec les crochets d'encliquetage (1', 2') et les crochets (20, 21).

11. Socle de montage pour plaques à bornes selon la revendication 9, caractérisé en ce que les coulisseaux (4', 5') en forme de baguettes ressortent latéralement du boitier (7'), à une extrémité, et sont pourvus chacun à cet endroit d'ouvertures d'actionnement (20, 22, 23) en forme de courbes, qui sont disposées en miroir l'une par rapport à l'autre d'un coulisseau à l'autre, et se recouvrent dans leur zone adjacente pour former une fente d'insertion (24) pour un outil d'actionnement, la rotation de cet outil après insertion faisant s'écarter les coulisseaux (4', 5') l'un de l'autre, en sens contraire, à l'encontre de la force du ressort (12').

12. Socle de montage pour plaques à bornes selon l'une des revendications 9 à 11 , caractérisé en ce que les bords de blocage (16') sont formés par des parties en retrait sur les bords inférieurs étroits des crochets d'encliquetage (1', 2') en forme de pattes.

Fig. 1

Fig. 2

EP 0 326 624 B1

Fig.3

Fig.4

EP 0 326 624 B1